# EUROPÄISCHE PATENTSCHRIFT

(11) **EP 2 786 031 B1**
(45) Veröffentlichungstag und Bekanntmachung des Hinweises auf die Patenterteilung: **13.09.2017**
(21) Anmeldenummer: 12786924.6
(22) Anmeldetag: 07.11.2012
(51) Int. Cl.: F16C 33/14, F16C 33/20, F16C 43/02, B21D 39/03, F16C 17/02, F16C 33/04

(54) **FLACHMATERIALABSCHNITT FÜR DIE HERSTELLUNG EINES BUCHSENFÖRMIGEN GLEITLAGERELEMENTS SOWIE GLEITLAGERBUCHSE**
FLAT MATERIAL SECTION FOR PRODUCING A BUSH-LIKE SLIDING BEARING ELEMENT AND SLIDING BEARING BUSH
DÉCOUPE DE MATÉRIAU PLAT POUR LA FABRICATION D'UN ÉLÉMENT DE PALIER LISSE EN FORME DE COUSSINET AINSI QUE COUSSINET DE PALIER LISSE

(30) Priorität: 01.12.2011 DE 102011087530
(43) Veröffentlichungstag der Anmeldung: 08.10.2014
(73) Patentinhaber: KS Gleitlager GmbH, 68789 St. Leon-Rot (DE)
(72) Erfinder: BAUR, Wolfgang, 76698 Ubstadt-Weiher (DE)
(74) Vertreter: DREISS Patentanwälte PartG mbB
(86) Internationale Anmeldenummer: PCT/EP2012/071956
(87) Internationale Veröffentlichungsnummer: WO 2013/079287

(56) Entgegenhaltungen:
- DE-A1- 4 335 329
- DE-A1- 10 240 282
- DE-A1-102007 062 145
- FR-A- 820 097
- US-A- 578 801
- US-A- 1 298 100
- US-A- 2 855 252
- US-A- 4 909 638

## Beschreibung

Die Erfindung betrifft einen Flachmaterialabschnitt für die Herstellung eines buchsenförmigen metallischen Gleitlagerelements oder Metall/Kunststoffverbundgleitlagerelements mit einer Stoßfuge, insbesondere Gleitlagerbuchse oder Gleitlagerbundbuchse, in einem Biegeumformprozess, insbesondere in einem Biegerollprozess, wobei die an der Stoßfuge aneinander anliegenden Enden des umgeformten Flachmaterialabschnitts über Vorsprünge und Ausnehmungen an den Enden miteinander in Eingriff gebracht sind, indem die Enden im Zuge des Biegeumformprozesses gegeneinander gedrückt werden und so miteinander in Eingriff gelangen, wobei die Vorsprünge hierbei relativ zur Umfangsrichtung des Gleitlagerelements gebogen und zudem gestaucht werden, also nicht ohne Stauchung in die Ausnehmungen einrückbar sind.

Derartige Flachmaterialabschnitte und hieraus in einem Biegeumformprozess gebildete Gleitlagerbuchsen sind bekannt, etwa aus US 2,855,252, US 4,909,638, US 2006/0185751 A1 oder aus DE 10 2009 060 212 A. Bei diesen Flachmaterialabschnitten bzw. hieraus hergestellten Buchsen sind an den Enden des Flachmaterialabschnitts mehrere Vorsprünge und Ausnehmungen vorgesehen, die dann miteinander "verclincht", d. h. verklammert werden, indem die Enden gegeneinander gedrückt und dabei stauchend oder materialverdrängend verformt werden. Es sind auch Flachmaterialabschnitte und hieraus gebildete Buchsen bekannt, bei denen die Enden der Flachmaterialabschnitte wie bei Puzzlestücken komplementär zueinander ausgebildet sind und wie Puzzlestücke miteinander formschlüssig verbunden werden, ohne dass merkliche Materialverdrängungen vorgenommen werden, z.B. DE 43 35 329 A1. US 1,298,100 zeigt Flachmaterialabschnitte, deren Enden komplementär zueinander und damit ohne Verschnitt aus einem Endlosband geschnitten sind, und aus einem solchen einzigen Flachmaterialabschnitt gerollte Buchsen.

Bei Gleitlagerbuchsen mit verhältnismäßig geringer Buchsenbreite von beispielsweise ≤ 10 mm und insbesondere mit einem Verhältnis von Buchsenbreite zu Wanddicke von < 10:1 ergeben sich aber sehr filigrane Vorsprünge, die durch das Ausstanzen, aber auch im Biegeumformprozess stark verformt werden, was aus verschiedenen Gründen nachteilig ist. Auch wenn, wie ebenfalls vorbekannt, zwei Vorsprünge am einen Ende des Flachmaterialabschnitts um einen mittigen Vorsprung am anderen Ende herumgebogen werden, kommt es zu Schwierigkeiten.

Der vorliegenden Erfindung liegt die Aufgabe zugrunde, einen Flachmaterialabschnitt der hier in Rede stehenden Art so auszubilden, dass sich auch verhältnismäßig schmale Gleitlagerbuchsen so herstellen lassen, dass sich ein Festsitz der gegeneinander verclinchten Enden prozesssicher und mit geringstmöglicher Beeinträchtigung des Materials während der Deformation beim Zusammendrücken der Enden des Flachmaterialabschnitts erreichen lässt.

Diese Aufgabe wird durch einen Flachmaterialabschnitt mit den Merkmalen des Anspruchs 1 gelöst.

Es zeigte sich, dass gerade bei verhältnismäßig schmalen Gleitlagerbuchsen, typischerweise bei Buchsen mit einem Verhältnis der Buchsenbreite zur Wanddicke von < 10:1, und insbesondere bei einer Buchsenbreite von ≤ 10 mm, eine festsitzende Verclinchung der beiden Enden des Flachmaterialabschnitts und damit ein dauerhaft spielfreier Stoßbereich der Gleitlagerbuchse erreicht werden kann. Dadurch, dass genau ein Vorsprung und eine Ausnehmung unmittelbar nebeneinander am jeweiligen Ende des Flachmaterialabschnitts vorgesehen werden, lassen sich hinreichend dimensionierte Vorsprünge und zugehörige Ausnehmungen realisieren, die den auftretenden Kräften beim Verformen, also beim Schließen der Stoßfuge, prozesssicher Stand zu halten vermögen. Es können Ablösungen der Gleitschicht im Bereich der Vorsprünge vermieden werden, d.h. das stets vorhandene Ausfallrisiko kann bei erfindungsgemäßen Flachmaterialabschnitten und hieraus geformten Buchsen hierdurch minimiert werden. Dadurch, dass der Vorsprung und die Ausnehmung an jedem Ende unmittelbar nebeneinander ausgebildet sind und einander gegenseitig begrenzen, wird außerdem während des Gegeneinanderdrückens der Enden eine wechselseitige Stützung der mit ihren seitlichen Flanken gegeneinander anliegenden Vorsprünge erreicht. Hierdurch stützt jeder Vorsprung den anderen Vorsprung auf der auf Druck beanspruchten Seite, was zu einer Reduzierung der Zugspannungen auf der gegenüberliegenden auf Zug beanspruchten Seite des jeweiligen Vorsprungs führt. Auf diese Weise wird beim Zusammendrücken der Enden nicht nur eine biegende, sondern eine stauchende Verformung der Vorsprünge provoziert, was zu einer Reduzierung der gefährlichen Zugspannungen führt, was sich insgesamt im Hinblick auf eine Reduzierung des Ausfallrisikos als vorteilhaft erweist.

Die jeweilige Ausnehmung wird vorzugsweise von geraden parallelen oder im Wesentlichen parallelen Flanken begrenzt. Unter im wesentlichen parallel wird ein Flankenverlauf verstanden, bei dem die Flanken höchstens einen Winkel von 5° zueinander bilden. Hierdurch kann beim Verclinchen der Enden das Material gezielter verdrängt werden, und die erzeugten Zugspannungen und Druckspannungen können reproduzierbarer eingeschätzt werden. Wenn die jeweilige Ausnehmung nicht von parallelen Flanken begrenzt wird, so wird zur Bestimmung des Winkels der Ausnehmung zur Umfangsrichtung die an den Vorsprung anschließende und den Vorsprung hintergreifende Flanke betrachtet.

Weiter erweist es sich als vorteilhaft, dass die Enden des Flachmaterialabschnitts in Breitenrichtung neben dem genau einen Vorsprung und neben der genau einen Ausnehmung eine einzige Trennebene der Stoßfuge definieren. Auf diese Weise kann bei der Herstellung, d. h. beim Ablängen der Flachmaterialabschnitte, insbesondere von einem endlos zugeführten Band, eine höhere Genauigkeit realisiert werden, als wenn mehrere zueinander in der späteren Umfangsrichtung (die der Bandrichtung oder Längsrichtung des Flachmaterialabschnitts entspricht) versetzt angeordnete Stoßenden gebildet werden.

In weiterer Ausbildung der Erfindung wird vorgeschlagen, dass sich der jeweilige Vorsprung vor dem Verbinden der Enden des Flachmaterialabschnitts im Wesentlichen in Umfangsrichtung erstreckt. In weiterer Ausbildung der Erfindung wird vorgeschlagen, dass die jeweilige Ausnehmung einen Winkel von 10 - 35°, insbesondere 20 - 30°, insbesondere 25 - 30 °, zur Umfangsrichtung bildet. Somit ist die Verformung des jeweiligen Vorsprungs ausgehend von seiner Erstreckung in Umfangsrichtung vorgegeben, da er nach dem Verclinchen der Enden des Flachmaterialabschnitts in die zur Umfangsrichtung geneigte Erstreckung der Ausnehmungen verformt wird.

Es erweist sich weiter als vorteilhaft, wenn die Vorsprünge gegenüber den Ausnehmungen mit einem Übermaß von 8 bis 12 % ausgeführt werden. Wenn die Vorsprünge bevorzugtermaßen einen Kopf aufweisen, der kreissegmentförmig begrenzt ist, so kann der Krümmungsradius dieser Kreissegmentform bei dem Vorsprung etwa 10 % größer sein als derjenige Radius, welcher die Ausnehmung endseitig begrenzt.

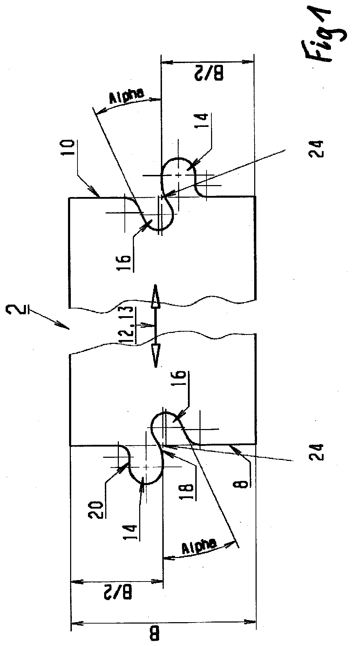

Nach einem weiteren Erfindungsgedanken von besonderer Bedeutung wird vorgeschlagen, den Flachmaterialabschnitt so auszubilden, dass die gegenüberliegenden Enden des Flachmaterialabschnitts bezüglich eines in Breitenrichtung des Flachmaterialabschnitts mittigen und in der Stoßfuge des herzustellenden Gleitlagerelements liegenden Punkts punktsymmetrisch zueinander ausgebildet sind. Legt man die in Figur 1 dargestellten Endbereiche 8, 10 des Flachmaterialabschnitts übereinander, indem man sie in horizontaler Bildebene der Figur 1 übereinander schiebt, so erkennt man die besonders bevorzugte punktsymmetrische Ausbildung der gegenüberliegenden Enden desselben Flachmaterialabschnitts. Der betreffende Symmetriedrehpunkt 24 ist in Figur 1 ebenfalls eingezeichnet. Werden die beiden Enden übereinander bewegt, so lassen sich die beiden Konturen durch eine Drehung in der Zeichnungsebene um 180° um diesen Drehpunkt 24 ineinander überführen. Dieser Ausführungsform kommt im Hinblick auf die reproduzierbare Ausbildung und prozesssichere Herstellung der Flachmaterialabschnitte sowie im Hinblick auf eine dauerhaft spielfreie Verklammerung der Enden des Flachmaterialabschnitts bzw. der hieraus geformten, insbesondere gerollten Buchse im Stoßbereich eine wesentliche Bedeutung zu.
Des Weiteren betrifft die Erfindung eine Gleitlagerbuchse oder Gleitlagerbundbuchse mit den Merkmalen der Ansprüche 5, 6 und 7.

Weitere Merkmale, Einzelheiten und Vorteile der Erfindung ergeben sich aus den beigefügten Patentansprüchen und aus der zeichnerischen Darstellung und nachfolgenden Beschreibung einer bevorzugten Ausführungsform der Erfindung. In der Zeichnung zeigt:
Figur 1 eine Draufsicht auf gegenüberliegende Enden eines erfindungsgemäß ausgebildeten Flachmaterialabschnitts für die Herstellung eines buchsenförmigen gerollten Gleitlagerelements; und
Figur 2 eine teilweise Ansicht auf den Stoßbereich einer aus einem Flachmaterialabschnitt nach Figur 1 hergestellten Gleitlagerbuchse.

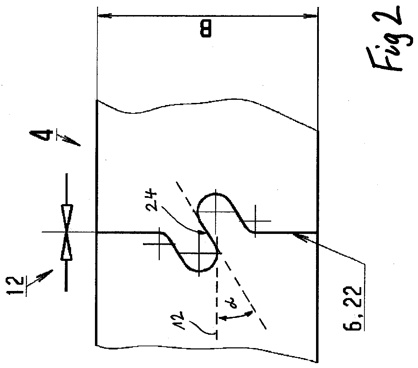

Figur 1 zeigt eine Draufsicht auf einen Flachmaterialabschnitt 2 für die Herstellung eines gerollten Gleitlagerelements 4 mit Stoßfuge 6, wie es in Figur 2 angedeutet ist. Bei dem Flachmaterialabschnitt 2 handelt es sich in bevorzugter Weise um ein Gleitlagerverbundmaterial mit einer Trägerschicht aus vorzugsweise Stahl und einer dem Gleitpartner zugewandten, also im fertigen Gleitlagerelement radial innen angeordneten Gleitschicht aus einem Gleitlagermaterial, typischerweise einer Kupferlegierung, wie Kupfer-Zinn, Kupfer-Zink, Kupfer-Aluminium, Kupfer-Nickel, oder einer Aluminiumlegierung oder einer Kunststoffgleitmischung, insbesondere auf PTFE-, PVDF-, POM-, PEEK-, PES-, PAI oder PI-Basis. Es gibt auch Anwendungen, bei denen die Gleitschicht radial außen vorgesehen ist.

Zur Herstellung des Gleitlagerelements 4 wird der Flachmaterialabschnitt 2, der zuvor vorzugsweise von einem endlosen Flachmaterial abgelängt wurde, einem Biegeumformprozess zugeführt, im Zuge dessen die freien Enden 8 und 10 des Flachmaterialabschnitts 2 in Umfangsrichtung 12 (Figur 2) gegeneinander gedrückt werden.

Wie aus den Figuren ersichtlich, ist an jedem Ende 8, 10 des Flachmaterialabschnitts 2 genau ein Vorsprung 14 und genau eine Ausnehmung 16 vorgesehen. Der jeweilige Vorsprung 14 ist vor der Ausführung des Biegeumformprozesses zum Herstellen des buchsenförmigen Gleitlagerelements 4 in der Umfangsrichtung 12 erstreckt, die auch der Längsrichtung 13 des Flachmaterialabschnitts 2 entspricht. Diese Längsrichtung bildet also gewissermaßen die Projektion der Umfangsrichtung 12 des herzustellenden Gleitlagerelements 4 auf die Ebene oder wiederum anders ausgedrückt die Längsrichtung 13 des Flachmaterialabschnitts 2 stellt naturgemäß die Abwicklung des buchsenförmigen Gleitlagerelements 4 bzw. dessen Umfangsrichtung 12 dar. Die jeweilige Ausnehmung 16 ist indessen in einem Winkel α von beispielhaft 25 bis 30° zur Längsrichtung des Flachmaterialabschnitts 2 geneigt ausgebildet. Sowohl der jeweilige Vorsprung 14 als auch die jeweilige Ausnehmung 16 sind beispielhaft mit einem kreissegmentförmigen Ende begrenzt, wobei der Krümmungsradius bei dem Vorsprung 14 um ca. 8 bis 12 % größer ausgebildet ist als der die Ausnehmung 16 begrenzende Krümmungsradius. Man erkennt des Weiteren, dass der Vorsprung 14 an einem jeweiligen Ende 8, 10 unmittelbar in die daneben liegende Ausnehmung 16 übergeht; Vorsprung 14 und Ausnehmung 16 begrenzen einander also gegenseitig. Die Ausnehmung 16 erstreckt sich dabei in denjenigen Bereich hinter dem Vorsprung 14, so dass in der Umfangsrichtung 12 ein Hintergriff ausgebildet wird, wenn die beiden Enden in einem Biegeumformprozess miteinander verklammert oder "verclincht" werden. Durch das vorstehend erwähnte geringfügige Übermaß des Vorsprungs 14 gegenüber der Ausnehmung 16 wird eine spielfreie Verklammerung der Stoßenden des buchsenförmigen Gleitlagerelements 4 erzielt. Dadurch dass beim Gegeneinanderdrücken der Enden 8, 10 die beiden Vorsprünge 14 gegeneinander gleiten und so einander auf der auf Druck beanspruchten Flanke 18 stützen, wird eine Reduzierung der Zugbeanspruchung bei der auf Zug beanspruchten Flanke 20 des Vorsprungs 14 erreicht.

Die Enden 8, 10 liegen außerhalb der Vorsprünge bzw. der Ausnehmungen über eine einzige Trennebene 22 gegeneinander an. Der Stoßbereich 6 des buchsenförmigen Gleitlagerelements 4 umfasst also nicht mehrere in Umfangsrichtung zueinander versetzte Ebenen.

Insgesamt wird durch die beschriebene erfindungsgemäße Gestaltung und Ausbildung mit genau einem Vorsprung und genau einer Ausnehmung an jedem den späteren Stoß des Gleitlagerelements 4 bildenden Ende 8, 10 des Flachmaterialabschnitts 12 auch bei verhältnismäßig geringen Buchsenbreiten eine hinreichende Dimensionierung von Vorsprung und Ausnehmung realisiert werden, so dass es beim Verclinchen der Stoßenden nicht zu Ausfällen wie Rissen und Abplatzen der Gleitschicht kommt, sondern ein spielfrei verclinchter Stoßbereich mit geringem Ausfallrisiko hergestellt werden kann.

Legt man die in Figur 1 dargestellten Endbereiche 8, 10 des Flachmaterialabschnitts übereinander, indem man sie in horizontaler Bildebene der Figur 1 übereinander schiebt, so erkennt man die besonders bevorzugte punktsymmetrische Ausbildung der gegenüberliegenden Enden desselben Flachmaterialabschnitts. Der betreffende Symmetriedrehpunkt 24 ist in Figur 1 ebenfalls eingezeichnet. Werden die beiden Enden übereinander bewegt, so lassen sich die beiden Konturen durch eine Drehung in der Zeichnungsebene um 180° um diesen Drehpunkt 24 ineinander überführen. Auch im verclinchten Zustand der Enden 8, 10 bei der gebildeten Gleitlagerbuchse in Figur 2 ist eine punktsymmetrische Ausbildung der Enden 8,10 gegeben, und der Symmetriepunkt 24 ist eingezeichnet.

## Patentansprüche

1. Flachmaterialabschnitt (2) für die Herstellung eines buchsenförmigen metallischen Gleitlagerelements (4) oder Metall/Kunststoffverbundgleitlagerelements (4) mit einer Stoßfuge (6), insbesondere Gleitlagerbuchse oder Gleitlagerbundbuchse, in einem Biegeumformprozess, wobei die an der Stoßfuge (6) aneinander anliegenden Enden (8, 10) des umgeformten Flachmaterialabschnitts (2) über Vorsprünge (14) und Ausnehmungen (16) an den Enden (8, 10) miteinander in Eingriff gebracht werden, indem die Enden (8, 10) im Zuge des Biegeumformprozesses gegeneinander gedrückt werden und so miteinander in Eingriff gelangen, wobei die Vorsprünge (14) hierbei relativ zur Umfangsrichtung (12) des Gleitlagerelements (4) gebogen und zudem gestaucht werden, wobei die Vorsprünge (14) nicht ohne Stauchung in die Ausnehmungen (16) einrückbar sind, wobei an jedem Ende (8, 10) des Flachmaterialabschnitts (2) genau ein Vorsprung (14) und genau eine Ausnehmung (16) ausgebildet ist und wobei der jeweilige Vorsprung (14) und die jeweilige Ausnehmung (16)an jedem Ende (8, 10) unmittelbar nebeneinander ausgebildet sind und stetig verrundet ineinander übergehen **dadurch gekennzeichnet, dass** die Enden (8, 10) in Breitenrichtung neben dem genau einen Vorsprung und neben der genau einen Ausnehmung eine einzige Trennebene der Stoßfuge (6) definieren und dass die Vorsprünge (14) gegenüber den Ausnehmungen (16) mit einem Übermaß von 5 - 15 % ausgebildet sind, wobei die jeweilige Ausnehmung (16) den jeweiligen Vorsprung (14) in der Umfangsrichtung (12) hintergreift, indem sie sich in einen Bereich in Umfangsrichtung (12) hinter dem Vorsprung (14) erstreckt, so dass in Umfangsrichtung (12) ein Hintergriff ausgebildet wird, wenn die beiden Enden (8, 10) im Zuge des Biegeumformprozesses gegeneinander gedrückt werden, und dass die jeweilige Ausnehmung (16) einen Winkel (α) von 5 - 45° zur Umfangsrichtung (12) bildet.

2. Flachmaterialabschnitt nach Anspruch 1, **dadurch gekennzeichnet, dass** sich der jeweilige Vorsprung (14) im wesentlichen in Umfangsrichtung (12) erstreckt und die jeweilige Ausnehmung (16) vorzugsweise einen Winkel (α) von 10 - 35°, insbesondere 20 - 30°, insbesondere 25 - 30°, zur Umfangsrichtung (12) bildet.

3. Flachmaterialabschnitt nach einem der vorstehenden Ansprüche, **dadurch gekennzeichnet, dass** die Vorsprünge (14) gegenüber den Ausnehmungen (16) mit einem Übermaß von 8 - 12 % ausgebildet sind.

4. Flachmaterialabschnitt nach einem der vorstehenden Ansprüche, **dadurch gekennzeichnet, dass** die gegenüberliegenden Enden (8, 10) des Flachmaterialabschnitts punktsymmetrisch zueinander ausgebildet sind.

5. Gleitlagerbuchse oder Gleitlagerbundbuchse (4) mit einer Stoßfuge (6), die ausgehend von einem platinenförmigen Flachmaterialabschnitt (2) nach einem oder mehreren der vorstehenden Ansprüche in einem Biegeumformprozess erhalten wurde, wobei die an der Stoßfuge (6) aneinander anliegenden Enden (8, 10) des umgeformten Flachmaterialabschnitts (2) über genau einen Vorsprung (14) und genau eine Ausnehmung (16) an jedem Ende (8, 10) miteinander in Eingriff sind, wobei der jeweilige Vorsprung (14) und die jeweilige Ausnehmung (16) an jedem Ende (8, 10) unmittelbar nebeneinander ausgebildet sind und stetig verrundet ineinander übergehen und der Vorsprung (14) am einen Ende (8) den Vorsprung (14) am anderen Ende (10) in der Umfangsrichtung (12) hintergreift, wobei die Vorsprünge (14) und die Ausnehmungen (16) im Zuge des Biegeumformprozesses gegeneinander gedrückt wurden und so miteinander in Eingriff gelangten.

6. Gleitlagerbuchse oder Gleitlagerbundbuchse nach Anspruch 5, **dadurch gekennzeichnet, dass** die jeweilige Ausnehmung (16) einen Winkel (α) von 10 - 35° zur Umfangsrichtung (12) bildet.

7. Gleitlagerbuchse oder Gleitlagerbundbuchse nach Anspruch 5 oder 6, **dadurch gekennzeichnet, dass** die miteinander in Eingriff befindlichen Enden (8, 10) punktsymmetrisch bezüglich eines in der einzigen Trennebene (22) liegenden Punkts (24) ausgebildet sind.

## Claims

1. Flat material section (2) for producing a bush-shaped metallic slide bearing element (4) or metal/plastic compound slide bearing element (4), with a butt joint (6), in particular a slide bearing bush or slide bearing flange bush, in a bend-forming process, wherein the ends (8, 10) of the deformed flat material section (2) lying against each other at the butt joint (6) can be engaged with each other via projections (14) and recesses (16) at the ends (8, 10) in that the ends (8, 10) are pressed against each other during the bend-forming process and are engaged with each other in this way, wherein the projections (14) are here bent relative to the circumference direction (12) of the slide bearing element (4) and also compressed, wherein the projections (14) cannot be moved into the recesses (16) without compression, wherein precisely one projection (14) and precisely one recess (16) are formed at each end (8, 10) of the flat material section (2), and wherein the respective projection (14) and the respective recess (16) are formed at each end (8, 10) immediately next to each other and merge with each other whilst becoming increasingly rounded, **characterised in that** the ends (8, 10) define a single separating plane of the butt joint (6) next to the precisely one projection and next to the precisely one recess in a width direction and **in that** the projections (14) are formed oversized compared to the recesses (16) by 5 - 15%, wherein the respective recess (16) engages behind the respective projection (14) in circumference direction (12) **in that** it extends into an area behind the projection (14) in circumference direction (12), so that a rear grip is created in circumference direction when the two ends (8, 10) are pressed against each other during the bend-forming process, and that the respective recess (16) forms an angle (α) of 5 - 45° to the circumference direction (12).

2. Flat material section according to claim 1, **characterised in that** the respective projection (14) substantially extends in circumference direction (12) and the respective recess (16) preferably forms an angle (α) of 10 - 35°, in particular 20 - 30°, in particular 25 - 30° to the circumference direction (12).

3. Flat material section according to one of the preceding claims, **characterised in that** the projections (14) are formed oversized by 8 - 12% compared to the recesses (16).

4. Flat material section according to one of the preceding claims, **characterised in that** the opposing ends (8, 10) of the flat material section are formed point-symmetrical to each other.

5. Slide bearing bush or slide bearing flange bush (4) with a butt joint (6), obtained by means of a bend-forming process starting with a board-shaped flat material section (2) according to one or several of the preceding claims, wherein the ends (8, 10) of the deformed flat material section (2) lying against each other at the butt joint (6) are engaged with each other via precisely one projection (14) and precisely one recess (16) at each end (8, 10), wherein the respective projection (14) and the respective recess (16) are formed directly next to each other at each end (8, 10) and merge with each other whilst becoming increasingly rounded, and the projection (14) at one end (8) grips the projection at the other end (10) from the rear in circumference direction (12), wherein the projections (14) and the recesses (16) were pressed against each other during the bend-forming process and are engaged with each other in this way.

6. Slide bearing bush or slide bearing flange bush according to claim 5, **characterised in that** the respective recess (16) forms an angle (α) of 10 - 35° to the circumference direction (12).

7. Slide bearing bush or slide bearing flange bush according to claim 5 or 6, **characterised in that** the ends (8, 10) that are engaged with each other are formed point-symmetrically in relation to a point (24) lying on a single separating level (22).

## Revendications

1. Tronçon de matériau plat (2) pour la fabrication d'un élément de palier lisse métallique en forme de douille (4) ou d'un élément de palier lisse composite en métal/plastique (4) avec un joint de bout (6), en particulier une douille de palier lisse ou une douille à collet de palier lisse, dans un processus de déformation par flexion, dans lequel les extrémités (8, 10) contigües l'une à l'autre au niveau du joint de bout (6) du tronçon de matériau plat déformé (2) sont mises en prise l'une avec l'autre via des saillies (14) et des cavités (16) au niveau des extrémités (8, 10), les extrémités (8, 10) étant poussées l'une contre l'autre dans le cadre du processus de déformation par flexion, et sont ainsi en prise l'une avec l'autre, dans lequel les saillies (14) sont de cette manière déformées par flexion par rapport à la direction circonférentielle (12) de l'élément de palier lisse (4) et sont de plus comprimées, dans lequel les saillies (14) ne peuvent pas être mises en prise sans compression dans les cavités (16), dans lequel une seule saillie (14) et une seule cavité (16) sont formées à chaque extrémité (8, 10) du tronçon de matériau plat (2), et dans lequel la saillie respective (14) et la cavité respective (16) à chaque extrémité (8, 10) sont formées directement l'une à côté de l'autre et arrondies en continu, se fondant l'une avec l'autre,
**caractérisé en ce que** les extrémités (8, 10), dans la direction de largeur, définissent un plan de séparation individuel du joint de bout (6) à côté de la seule saillie et à côté de la seule cavité, et **en ce que** les saillies (14) sont formées, par rapport aux cavités (16), avec un surdimensionnement de 5 à 15 %, dans lequel la cavité (16) respective vient en prise derrière la saillie respective (14) dans la direction circonférentielle (12), en s'étendant jusque dans une zone derrière la saillie (14) dans la direction circonférentielle (12), de sorte qu'une mise en prise par l'arrière est formée dans la direction circonférentielle (12), lorsque les deux extrémités (8, 10) sont poussées l'une contre l'autre au cours du processus de déformation par flexion, et **en ce que** la cavité respective (16) forme un angle (α) de 5 à 45° par rapport à la direction circonférentielle (12).

2. Tronçon de matériau plat selon la revendication 1, **caractérisé en ce que** la saillie respective (14) s'étend sensiblement dans la direction circonférentielle (12) et la cavité respective (16) forme de préférence un angle (α) de 10 à 35°, en particulier de 20 à 30°, en particulier de 25 à 30° par rapport à la direction circonférentielle (12).

3. Tronçon de matériau plat selon l'une quelconque des revendications précédentes, **caractérisé en ce que** les saillies (14) sont formées avec un surdimensionnement de 8 à 12 % par rapport à la cavité (16).

4. Tronçon de matériau plat selon l'une quelconque des revendications précédente, **caractérisé en ce que** les extrémités opposées (8, 10) du tronçon de matériau plat sont agencées avec symétrie ponctuelle l'une par rapport à l'autre.

5. Douille de palier lisse ou douille à collet de palier lisse (4) avec un joint de bout (6), obtenue à partir d'un tronçon de matériau plat (2) en forme de platine selon une ou plusieurs des revendications précédentes dans un processus de déformation par flexion, dans laquelle les extrémités (8, 10) contigües l'une à l'autre au niveau du joint de bout (6) du tronçon de matériau plat déformé (2) sont mises en prise l'une avec l'autre via une seule saillie (14) et une seule cavité (16) à chaque extrémité (8, 10), dans laquelle la saillie respective (14) et la cavité respective (16) à chaque extrémité (8, 10) sont formées directement l'une à côté de l'autre et arrondies en continu se fondant l'une avec l'autre, et la saillie (14) au niveau d'une extrémité (8) vient en prise derrière la saillie (14) au niveau de l'autre extrémité (10) dans la direction circonférentielle (12), dans laquelle les saillies (14) et les cavités (16) sont poussés les unes contre les autres dans le cadre du processus de déformation par flexion, et ainsi sont en prise les unes avec les autres.

6. Douille de palier lisse ou douille à collet de palier lisse selon la revendication 5, **caractérisée en ce que** la cavité respective (16) forme un angle (α) de 10 à 35° par rapport à la direction circonférentielle (12).

7. Douille de palier lisse ou douille à collet de palier lisse selon la revendication 5 ou 6, **caractérisée en ce que** les extrémités (8, 10) se trouvant en prise l'une avec l'autre sont formées avec une symétrie ponctuelle par rapport à un point (24) situé au niveau du plan de séparation individuel (22).
